# EUROPEAN PATENT APPLICATION

(11) **EP 3 617 940 A1**
(43) Date of publication of application: **04.03.2020**
(21) Application number: 19193149.2
(22) Date of filing: 22.08.2019
(51) Int. Cl.: G06K 9/00

(54) **USER VERIFYING SYSTEM**

(30) Priority: 30.08.2018 JP 2018161614
(71) Applicant: Kabushiki Kaisha Toshiba, Minato-ku Tokyo 105-0023 (JP); Toshiba Infrastructure Systems & Solutions Corporation, Kawasaki-shi, Kanagawa 212-0013 (JP)
(72) Inventor: Nakamura, Kohta, Kanagawa, 212-0013 (JP); Saguchi, Taichi, Kanagawa, 212-0013 (JP); Terakado, Yasuhiro, Kanagawa, 212-0013 (JP); Miyata, Junichi, Kanagawa, 212-0013 (JP)
(74) Representative: AWA Sweden AB

(57) **Abstract**

A system of an embodiment includes an analysis device that includes a first database for storing information for identifying a person and an object inside an image, performs, using the information, image analysis of footage taken by cameras installed in locations, associates an identified person, an object carried by the person, and a seat location with each other, determines, based on a user facial image and the user's seat location, whether a person associated with the seat location is the actual user, and outputs a verification result; and a device that includes a second data base for storing a seat, a facial image and identifying information of each user, transmits information on the user's seat and the facial image to the analysis device, receives the verification result from the analysis device, and transmits an alert to a predetermined point of contact.

## Description

### FIELD

Embodiments described herein relate generally to a verifying system.

### BACKGROUND

Footage inside vehicles used by a large, unspecified number of persons, such as trains, airplanes, ships, shuttle buses etc., or inside facilities at which a large, unspecified number of persons gathers, such as, train stations, airports, live houses, cinemas, theaters, stadiums, amusement parks, commercial facilities etc., taken by cameras installed in a plurality of locations is monitored by monitoring personnel in order to check for suspicious persons or suspicious objects.

From the recent implementation of enhanced terror prevention at various facilities, it is expected that suspicious persons or suspicious objects can be kept from infiltrating vehicles or facilities with a large number of persons, such as stadiums, to ensure an increased user safety.

It has, so far, been suggested, for example, that radio tags be attached to passenger hand luggage, and carry-in/out of hand luggage be managed using IC card readers/writers provided at entrance/exit gates.

### SUMMARY

However, this kind of management by using radio tags attached to the hand luggage requires the act of attaching the radio tags as well as the provision of the tools needed for managing. It has therefore been difficult to contain the costs for hand luggage management.

In some instances, photos stored in advance are used to check at ticket gates or entrance gates whether a person is the actual person. However, such has not yet gone as far as checking whether seated persons are the actual persons. If, for example, it were possible to check whether a person passing the ticket/entrance gate matches a seated person, persons using false names could be kept from entering, or suspicious persons could be kept from being replaced instead. If so, an enhanced terror prevention can be expected.

Further, if, for example, users of vehicles were checked for whether they are seated in their seats, these persons could be kept from missing their stops when falling asleep. Such would enhance user convenience.

Embodiments described herein have been made in view of the above-mentioned circumstances, and it is an object of the embodiments of the present invention to provide a verifying system that enhances both user safety and convenience.

A verifying system according to an embodiment comprising: an image analysis device that includes a first database for storing at least image analysis information for identifying a person and an object inside an image, performs, using the image analysis information, image analysis of footage taken by cameras installed in a plurality of locations, associates an identified person, an object carried by the person, and a seat location with each other, determines, based on a user facial image and the user's seat location received from outside, whether or not a person associated with the seat location is the actual user, and outputs a verification result; and a notifying device that includes a second data base for storing a seat, a facial image and user-identifying information of each user and the association is stored, transmits information on the user's seat and the facial image to the image analysis device, receives the verification result from the image analysis device, and transmits, if the image analysis device determines that the person is not the actual user, an alert to a predetermined point of contact.

### BRIEF DESCRIPTION OF THE DRAWINGS

FIG. 1 is a view schematically showing a configuration example of the embodiment of the verifying system.
FIG. 2 is a timing chart explaining the example operation of the verifying system according to an embodiment.
FIG. 3 is a flowchart explaining the example operation of the verifying system according to the embodiment.

### DETAILED DESCRIPTION

Hereinafter, an embodiment of the verifying system will be described with reference to the drawings.

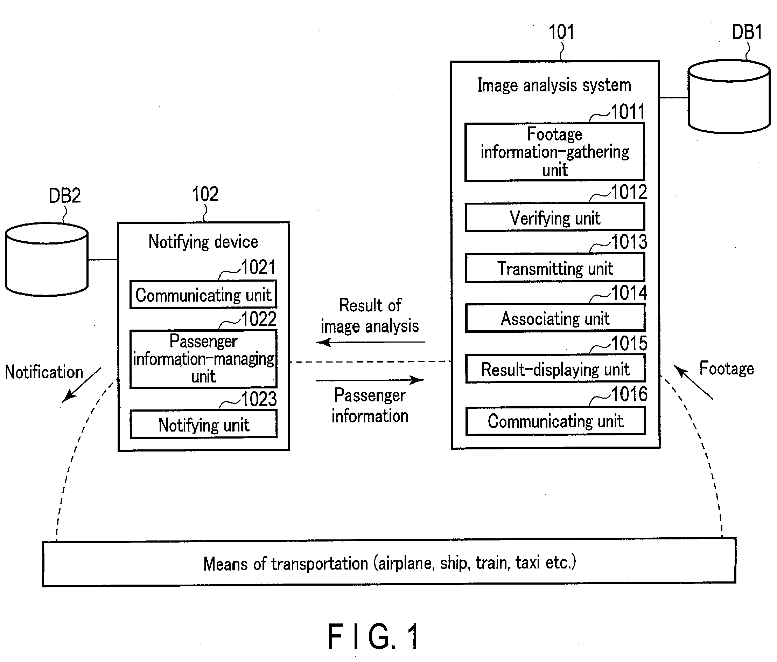

FIG. 1 is a view schematically showing a configuration example of the embodiment of the verifying system.

The verifying system according to this embodiment comprises an image analysis device 101 and a notifying device 102 and checks, from images, whether or not, on vehicles used by unspecified persons, such as airplanes, ships, trains, buses, taxis etc., whether users are seated in their designated seats.

The image analysis device 101 is a calculating device, comprising at least one processor such as a CPU (central processing unit) or an MPU (micro processing unit), and a memory for storing a program to be executed by the processor, wherein a software (program) is installed to the image analysis device 101 that makes carrying out the below-described process possible.

The image analysis device 101 includes a first database DB1 storing at least image analysis information for identifying persons and objects included in images obtained from footage taken by cameras installed in a plurality of locations, performs, using the image analysis information, image analysis onto the footage, associates identified persons, objects and seat locations with each other, and uses, at a plurality of timings, the footage taken by the cameras and the information on the user (e.g. passenger) to verify whether a seated person is the actual user.

The image analysis device 101 gathers footage (moving images or still images) taken by the plurality of cameras provided at means of transportation such as, for example, vehicles, train stations, airports etc., analyzes the obtained images, associates the persons, objects and seat locations with each other, and identifies passengers based on passenger information provided from the outside.

The image analysis device 101 may be installed to vehicles such as trains, airplanes, ships, buses, taxis, as well as to ground facilities such as train stations, airports, ports, bus terminals etc. Where the image analysis device 101 is installed to a vehicle, and footage is gathered from cameras provided in the plurality of locations in the vehicle to which the image analysis device 101 is installed, the footage can easily be transmitted. The image analysis device 101 may be provided at facilities such as train stations or airports. In any case, the image analysis device 101 can gather footage from cameras provided in the plurality of locations for each of: a plurality of vehicles, and a plurality of facilities such as train stations, airports, ports etc. to be managed.

The image analysis device 101 comprises a footage information-gathering unit 1011, a verifying unit 1012, a transmitting unit 1013, an associating unit 1014, a result-displaying unit 1015, a communicating unit 1016, and a first database DB1.

The footage information-gathering unit 1011 can gather footage taken by cameras installed in a plurality of locations. The footage information-gathering unit 1011 can, for example, receive the footage taken with the cameras provided at a means of transportation, associate the information, such as the locations at which the footage was taken (camera locations) or the time at which the footage was taken, and store the associations in the first database DB1. Note that the footage information-gathering unit 1011 may manage in a way in which at least part of the footage over a certain period of time from the present to the past in the first database DB1 is accumulated, and the footage preceding this certain period of time is deleted from the first database DB1.

Also, the footage information-gathering unit 1011 does not need to gather the entire footage constantly taken by the plurality of cameras, meaning that it can gather only footage taken by each camera installed in the plurality of locations over a certain period of time. Moreover, the footage information-gathering unit 1011 can gather only images of an area included in the footage taken by the plurality of cameras.

The associating unit 1014 can analyze the images gathered by the footage information-gathering unit 1011, identify persons and persons' belongings, associate the persons, objects and seat locations with each other, and store these associations in the first database DB1.

The verifying unit 1012 checks whether the seated persons are the actual persons by comparing gathered images to facial images of the passengers included in the passenger information received via the communicating unit 1016 from the outside. The passenger information includes at least passenger facial images, passenger sitting locations, and itinerary information (starting point, destination, departure time, arrival time etc.).

The verifying unit 1012 determines whether or not a person is the actual person by comparing, for each seat in the vehicle, passenger images corresponding to the seat location included in the passenger information to the passenger image associated with the seats. As an example, should the passenger information include the passenger sex and age, the sex and age of the seated person can also be considered when determining, based on the passenger information, whether the passenger is the actual passenger.

Also, the verifying unit 1012 can determine passengers may have missed their point of disembarkation, for example, in the case where a passenger time of arrival at his destination has been exceeded but the passenger is still seated and his belongings are still in his seat.

Also, the verifying unit 1012 may compare a list of facial images stored in advance in the first database DB1 to the passenger information to determine whether the passenger is included in the list. In case the list of facial images stored in the first database DB1 includes facial images and information on name, age, and sex of, for example, a missing person, the verifying unit 1012 can determine whether the passenger is the missing person.

A verification result from the verifying unit 1012 includes at least, for example, passenger-identifying information and the result on whether the person is the actual person. The verifying unit 1012 stores the verification result in the first database DB1 and provides them to the result-displaying unit 1015. Also, the verification result from the verifying unit 1012 is transmitted via the transmitting unit 1013 to the notifying device 102. Note that the verifying unit 1012 may obtain images of persons determined as being suspicious persons or missing persons from the footage gathered by the footage information-gathering unit 1011 and include them in the verification result.

Note that the verifying unit 1012 may store the verification result in the first database DB1 only when a seated passenger is not the actual passenger, or store all results of verification in the first database DB1.

Also, when the seated passenger is not the actual passenger, the verifying unit 1012 may determine that an object associated with the passenger is a suspicious object. In this case, the verification result from the verifying unit 1012 may include the presence of a suspicious object as well as additional images of the object determined as being a suspicious object obtained from the footage gathered by the footage information-gathering unit 1011.

In case a passenger has undergone boarding procedure to, for example, an airplane, a ship etc. and failed to be seated in his seat by the time the boarding gate closes, the verifying unit 1012 may display images of the luggage belonging to the passenger associated with that seat at the result-displaying unit 1015. Since luggage checked-in by persons who failed to board could be suspicious objects, staffs at airports or ports can quickly remove, based on the displayed images, the luggage already checked-in by the persons who failed to board from the airplane or ship.

Also, in the case where the passenger information includes location information from GPS installed to the passenger belongings, it is possible to determine, using the location information on the belongings, that the passenger has overslept (travelled beyond) his destination. As an example, the verifying unit 1012 may, at a certain point after the time of arrival at the passenger destination, receive information on the belongings' location, and determine, when the location information indicates that the belongings after the time of arrival at the destination of the passenger associated with the seat are still inside the vehicle, that the passenger has overslept (travelled beyond) his destination.

The result-displaying unit 1015 includes a displaying unit (not shown) such as, for example, an LC display or an OLED display device, and can display the verification result received from the transmitting unit 1013 on the displaying unit. The displaying unit may be provided, for example, in a control platform where it is visible to crewmen, or where it is visible to monitoring personnel at the train station, airport, port etc.

The communicating unit 1016 comprises a communication circuit capable of external communication over radio or wire. The communicating unit 1016 can transmit the verification result from the verifying unit 1012 to the outside, and receive passenger information transmitted from the outside to the image analysis device 101.

The notifying device 102 is a calculating device, comprising at least one processor such as a CPU (central processing unit) or an MPU (micro processing unit), and a memory for storing a program to be executed by the processor, wherein a software (program) is installed to the notifying device 102 that makes carrying out the below-described process possible.

The notifying device 102 includes a second database DB2 in which associations are stored of at least: the usage information (including at least information on the starting point, the destination, and the seat location) of each of the plurality of users (passengers), facial image data, and user-identifying information, and transmits, when it has been determined at the image analysis device 101 that the seated passenger is not the actual passenger, an alert to a predetermined point of contact such as the crewmen of a vehicle or the monitoring personnel of a train station or airport.

The notifying device 102 may be installed to vehicles such as trains, airplanes, ships, bus, taxis etc. as well as be provided to ground facilities such as train stations, airports, ports, bus terminals etc. Also, as shown in FIG. 1, the notifying device 102 and the image analysis device 101 may be independent or unified.

The notifying device 102 comprises a communicating unit 1021, a passenger information-managing unit (user information-managing unit) 1022, a notifying unit 1023, and a second database DB2.

Stored in the second database DB2 are, for each of the plurality of users (passengers), associations of, for example, the usage information, name, sex, contact information, transit IC card information, facial images etc. and ID information for identifying passengers. Stored in the second database DB2 may be, for groups of passengers, in units of groups, usage information, facial images etc.

Note that the passenger facial images stored in the second database DB2 of the notifying device 102 may be images taken at the time when, for example, the passengers purchase their tickets or pass ticket gates, or may be images taken in advance from the facial images on their passports or driver's licenses. Also, for verifying airplane passengers, the notifying device 102 may obtain facial images of the actual passengers using cameras provided at the boarding procedure (check-in) counters, the boarding gates etc.

The communicating unit 1021 comprises a communication circuit capable of external communication over radio or wire. The communicating unit 1021 can transmit the passenger information stored in the second database DB2 to the outside and receive the identification results transmitted from the outside to the notifying device 102.

The passenger information-managing unit 1022 at least reads from, for example, the second database DB2, the usage information, the facial image data, and the ID information on the plurality of passengers of each service, and transmits, via the communicating unit 1021, the read information to the image analysis device 101 that analyzes the images for each service.

Also, when the passenger information-managing unit 1022 has received, via the communicating unit 1021, the results of the passenger verification, it can associate the identification results with the passenger ID information and store these associations in the second database DB2.

The passenger information-managing unit 1022 can transmit the passenger information to the image analysis device 101 according to the timing at which, for example, a passenger embarks the vehicle. Where the relevant service is an airplane or a ship, the passenger information-managing unit 1022 may transmit passenger information on passengers using the service to the image analysis device 101 at the timing at which, for example, the boarding procedure for the passengers ends. Where the relevant service is a train, the passenger information-managing unit 1022 may transmit passenger information on passengers using the service to the image analysis device 101 at the timing at which, for example, the relevant train departs the initial stop or a stopover train station, or may do so a certain time prior to the scheduled time of departure.

When the notifying unit 1023 receives, from the image analysis device 101, the result of passenger verification that it has been determined that a passenger is not the actual passenger, it transmits an alert to a predetermined point of contact such as a crewman of the vehicle, or a monitoring personnel of the train station or airport used by the passenger.

When the notifying unit 1023 receives the result of passenger verification from the image analysis device 101 via the communicating unit 1021 that it has been determined that a passenger has overslept (travelled beyond) his destination, it can obtain the contact information associated with the ID information on the passenger from the second database DB2, and notify (i.e., transmit an alert to) the passenger (or a predetermined point of contact at the train station, airport, port, bus terminal, or in the vehicle etc.) that the passenger has overslept (travelled beyond) his destination.

The notifying unit 1023 may, for example, transmit an email or a short email to the email address or the telephone number designated as the passenger contact information, or may notify a crewman.

Also, when a passenger determined as not being the actual passenger is changing from one vehicle to another, the notifying unit 1023 may notify a crewman of the next vehicle to enable tracing a suspicious person.

Also, when a passenger changes from one vehicle to another, the notifying unit 1023 may notify the passenger via email etc., prior to arriving at the destination, that he should change to the next vehicle, so as to prevent oversleeping (travelling beyond) his destination by the passenger from happening.

Hereinafter, an example operation of the aforementioned verifying system will be explained.

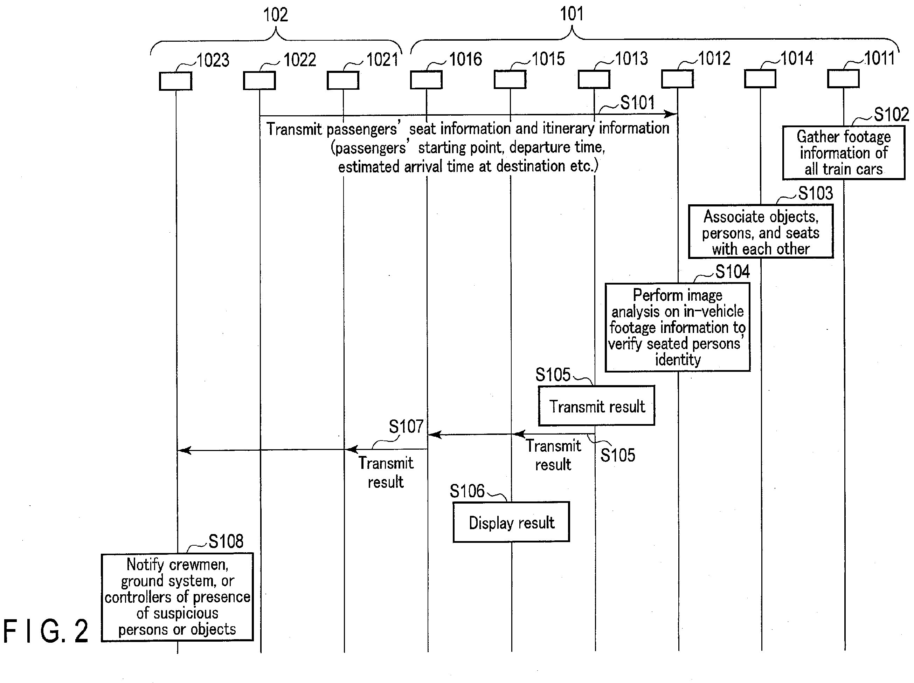

FIG. 2 is a timing chart explaining the example operation of the verifying system according to an embodiment.

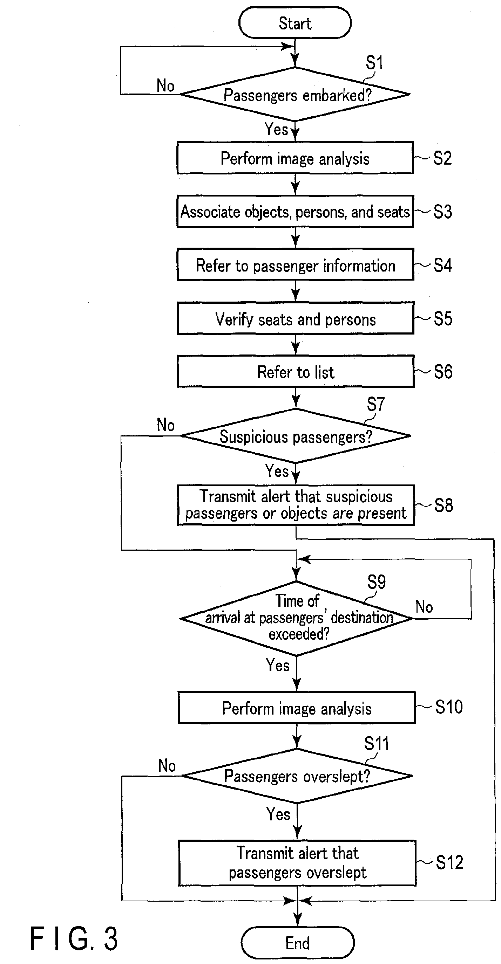

FIG. 3 is a flowchart explaining the example operation of the verifying system according to the embodiment.

The example operation explained hereinafter is verifying passengers on a train in which the seats used by the passengers are designated in advance.

### (S101)

The passenger information-managing unit 1022 reads the information stored in the second database DB2 and transmits the passenger information (including passenger facial images, passenger sitting locations, and itinerary information (starting point, destination, departure time, arrival time etc.)) via the communicating unit 1021 to the image analysis device 101.

Note that the passenger information on the passengers using the train can be updated up to the minute from when the tickets start selling until the train departs the one train stop before the final train stop. As an example, every time the train departs a train station, the passenger information-managing unit 1022 may transmit updated passenger information to the image analysis device 101.

The communicating unit 1016 receives the passenger information from the notifying device 102 and transmits the passenger information to the verifying unit 1012. The verifying unit 1012 stores the passenger information received via the communicating unit 1016 in the first database DB1.

### (S102)

When the image analysis device 101 has detected that passengers have embarked (step S1), the footage information-gathering unit 1011 starts gathering, ahead of passenger verification, the footage taken by the cameras installed in the plurality of locations such as inside the train stations or on the train cars. The footage information-gathering unit 1011 can gather, for example, the footage of all train cars of the relevant train.

The footage information-gathering unit 1011 gathers footage when passengers embark at, for example, the initial stop until they disembarks at the terminal stop. However, the footage information-gathering unit 1011 does not have to gather footage throughout the entire course of time. It is sufficient if the footage information-gathering unit 1011 gathers at least the footage at the times at which passengers embark and disembark, for example, from when the train arrives at a train station until it leaves the train station and a certain time around this time.

### (S103)

The associating unit 1014 performs image analysis to identify persons and objects by using the footage gathered by the footage information-gathering unit 1011 (step S2).

The associating unit 1014 associates the images of the persons and objects identified by the image analysis with the seat locations and stores these associations in the first database DB1. The associating unit 1014 may, for example, for groups of passengers, associate images of persons and objects in units of groups with a plurality of seat locations and store these associations in the first database DB1 (step S3).

### (S104)

The verifying unit 1012 reads out the passengers information stored in the first database DB1 (step S4).

The verifying unit 1012 can determine whether or not a seated person is the actual passenger by comparing at least the facial image data of the passengers corresponding to each seat location to the images of the persons associated with the seat locations at the associating unit 1014 (step S5) .

Note that the verifying unit 1012 can verify, from a plurality of images associated with the seat locations, passengers by determining whether or not, for example, the face, sex, age etc. of a seated person matches with the passenger information. By using not only facial images for verification, but also the information on sex or age, the verifying unit 1012 can determine more accurately whether passengers are the actual passengers.

The verifying unit 1012 may, for example, refer to a list stored in advance in the first database DB1 to determine whether or not a seated person is a person that is included in the list (step S6). If the seated person is included in the list, the verifying unit 1012 may prompt the footage information-gathering unit 1011 to obtain footage from a plurality of cameras tracking missing persons to understand the person's whereabouts.

### (S105)

If the verifying unit 1012 determines, as a result of the verification in above steps S5 and S6, the presence of a suspicious person (or missing person) or a suspicious object (step S7), the verifying unit 1012 transmits these results to both the result-displaying unit 1015 and the communicating unit 1016. The verifying unit 1012 may store the verification result in the first database DB1.

### (S106)

The result-displaying unit 1015 transmits an alert to crewmen or ground staff by displaying the received verification result on a displaying unit. The result-displaying unit 1015 may display the verification result on a displaying unit only where passengers have been determined as not being the actual passengers.

### (S107)

The communicating unit 1016 transmits the received verification result to the communicating unit 1021 of the notifying device 102, and the communicating unit 1021 transmits the received verification result to the notifying unit 1023.

### (S108)

The notifying unit 1023 receives the verification result from the image analysis device 101 and notifies (transmits an alert to) the train crewmen, ground systems, controllers etc. of the presence of a suspicious person (or missing person) or suspicious object (step S8).

When the verifying unit 1012 determines, as a result of the verification in above steps S5 and S6, the presence of a suspicious person (or missing person) or a suspicious object (step S7), the verifying unit 1012 can, in addition, determine whether or not a passenger has overslept (travelled beyond) his destination.

If the verifying unit 1012 determines, based on the information on the passenger destination included in the passenger information, that the time of arrival at the destination has been exceeded (step S9), it analyzes images of the seat location associated with the passenger (step S10) to determine whether or not the passenger has overslept (step S11).

If the verifying unit 1012 determines, based on the images of the seat location, that the passenger is seated in his seat, it assumes that the passenger has overslept (travelled beyond) his destination, and transmit the verification result to both the result-displaying unit 1015 and the communicating unit 1016.

The result-displaying unit 1015 notifies, by displaying the received verification result on the display, the crewmen or ground staff of the presence of a passenger who overslept (travelled beyond) his destination.

The communicating unit 1016 transmits the received verification result to the communicating unit 1021 of the notifying device 102, and the communicating unit 1021 transmits the received verification result to the notifying unit 1023.

The notifying unit 1023 can receive the verification result from the image analysis device 101 and notify the train crewmen, ground systems, controllers etc. of the presence of passenger who overslept (travelled beyond) their destinations.

Thanks to the above notification of passengers who overslept (travelled beyond) their destinations, it is possible to promptly inform passengers of the fact that they travelled beyond their destinations, and thereby avoid passengers from drastically travelling beyond their destinations.

As described above, thanks to the verifying system according to the present embodiment, it is possible to notify crewmen etc., when a passenger on, for example, a train is not the actual passenger, of the possibility that there may be a suspicious person or a suspicious object on the train, thereby ensuring the safety of the many passengers using the vehicle.

Also, it enables business operators such as railway companies to ensure passenger safety without having to increase human resource for monitoring suspicious persons etc. and thereby cut labor costs.

In other words, the present embodiment helps provide a verifying system that enhances both user safety and convenience.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

For example, in the above embodiment, a system for verifying passengers on, for example, a train has been described. However, the present verifying system is not limited to such. The present verifying system may, for example, be applied to users of other vehicles besides trains, or to users of facilities other than for vehicles. In any of these cases, the achieved effects remain the same as in the above embodiment.

## Claims

1. A verifying system comprising:
an image analysis device that includes a first database for storing at least image analysis information for identifying a person and an object inside an image, performs, using the image analysis information, image analysis of footage taken by cameras installed in a plurality of locations, associates an identified person, an object carried by the person, and a seat location with each other, determines, based on a user facial image and the user's seat location received from outside, whether or not a person associated with the seat location is the actual user, and outputs a verification result; and
a notifying device that includes a second data base for storing a seat, a facial image and user-identifying information of each user and the association is stored, transmits information on the user's seat and the facial image to the image analysis device, receives the verification result from the image analysis device, and transmits, if the image analysis device determines that the person is not the actual user, an alert to a predetermined point of contact.

2. The verifying system according to claim 1, wherein the image analysis device further comprises:
a footage information-gathering unit that gathers footage taken by the cameras;
an associating unit that identifies, based on footage gathered by the footage information-gathering unit, the person and the object in an image by using the image analysis information, associates the person, the object carried by the person and the seat location with each other, and stores the association in the first database;
a verifying unit that receives the information on the user's seat and the facial image, and determines, based on the associated person, the object carried by the person, and the seat location stored in the first database and the received information on the seat and the facial image, whether or not the person associated with the seat location is the actual user; and
a transmitting unit that transmits, when it is determined that the person associated with the seat location is not the actual user, the verification result to the notifying device.

3. The verifying system according to claim 1 or claim 2, wherein the notifying device further comprises:
a user information-managing unit that transmits the information on the user's seat and the facial image to the image analysis device; and
a notifying unit that, when the verification result is received, transmit an alert to the predetermined point of contact.

4. The verifying system according to claim 2,
wherein the first database includes a list of at least one facial image stored in advance, and
wherein the verifying unit determines, when it is determined that the person associated with the seat location is not the actual user, whether or not, by reading the list and comparing the facial image of the user to the facial image of the list, the person is the same as in the facial image.

5. The verifying system according to claim 2,
wherein information on the user's destination and the user-identifying information are associated with each other and the association is stored in the second data base,
wherein the notifying device transmits the information on the user's destination to the image analysis device, and
wherein, when it is determined that the person associated with the seat location is the actual user, the verifying unit determines, based on the information on the user's destination, whether or not a destination arrival time of the user has been exceeded, and transmits an alert to the predetermined point of contact that the user is still in the seat location even though the destination arrival time has been exceeded.
